(19) Europäisches Patentamt
European Patent Office
Office européen des brevets

(11) **EP 2 133 658 A1**

(12) **EUROPEAN PATENT APPLICATION**

(43) Date of publication:
**16.12.2009 Bulletin 2009/51**

(51) Int Cl.:
**G01B 9/02** (2006.01)

(21) Application number: **09162542.6**

(22) Date of filing: **12.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **13.06.2008 JP 2008155282**

(71) Applicant: **Mitutoyo Corporation**
**Kawasaki-shi,**
**Kanagawa 213-8533 (JP)**

(72) Inventor: **Miyata, Kaoru**
**Ibaraki 305-0854 (JP)**

(74) Representative: **Skone James, Robert Edmund**
**Gill Jennings & Every LLP**
**Broadgate House**
**7 Eldon Street**
**London EC2M 7LH (GB)**

(54) **Two-Wavelength Laser Interferometer and Method of Adjusting Optical Axis in the Same**

(57) A two-wavelength laser interferometer includes: a two-wavelength laser light source (11) that emits two laser beams (L1 and L2) having different wavelengths; a two-wavelength polarizing beam splitter that includes a beam splitter and a beam superposer, the beam splitter splitting each of the two laser beams (L1, L2) having the different wavelengths into a reference beam (L11, L21) and a measurement beam (L12, L22), the beam superposer superposing the reference beam and the measurement beam reflected by a reference surface and a target measurement surface together; and a calculator (24) that obtains a displacement amount of the target measurement surface per wavelength from the beams superposed together and obtains a displacement amount of the target measurement surface applied with atmospheric refractive index correction through a calculation in which the displacement amount obtained per wavelength is used. In the two-wavelength laser interferometer, an optical-axis superposer (13) is provided between the two-wavelength laser light source and the beam splitter. The optical-axis superposer initially separates the two laser beams having the different wavelengths emitted from the two-wavelength laser light source and subsequently superposes optical axes of the two laser beams together.

FIG.2

Description

## BACKGROUND OF THE INVENTION

### 1. FIELD OF THE INVENTION

The present invention relates to a two-wavelength laser interferometer and a method of adjusting optical axis in a two-wavelength laser interferometer.

### 2. DESCRIPTION OF RELATED ART

Due to their ability to measure length with high precision, laser interferometers play an important role in industry, being used in tasks such as the assessment and calibration of industrial machinery. However, in a measurement of length by laser interferometry, uncertainty of measurement may be increased due to the effects of atmospheric fluctuation, for which various measures have been proposed to counter atmospheric fluctuation.

A method of measuring length by laser interferometry with reduction of the effects of atmospheric fluctuation is typically a method of measuring length by two-wavelength lightwave interferometry (See Document 1:"Correction of Optical Distance Measurements for the Fluctuating Atmospheric Index of Refraction" Journal of Geophysical Research. Vol. 70, No. 10, May15,1965, pp. 2461-2462).

According to this method, two light waves having different wavelengths are used to simultaneously measure the amount of displacement of a measurement target, and an amount of displacement in which the effects of atmospheric fluctuation are reduced is obtained through a calculation using the obtained two measurement values. Accordingly, because there is no need to measure various kinds of environmental factors such as temperature, humidity and air pressure, uncertainty of measurement can be reduced and measurement of length with high precision can be anticipated.

A two-wavelength laser interferometry length measurement system that uses such a method of measuring length by two-wavelength lightwave interferometry, is anticipated to be capable of measuring displacement amounts with high precision while reducing the effects of atmospheric fluctuation, even when long strokes that exceed tens of millimeters are involved.

According to the method of measuring length by two-wavelength lightwave interferometry, the amount of displacement D after correction of atmospheric refractive index can be obtained from the following mathematical model, where D1 and D2 represent the displacement amounts measured with laser beams having respective wavelengths:

$$D = D2 - A(D2 - D1) \quad ...(1)$$

$$A = (n2 - 1)/(n2 - n1) \quad ...(2)$$

In the formula, n1 and n2 represent the atmospheric refractive indexes for the wavelengths of the laser beams corresponding to D1 and D2. Furthermore, the value of the A coefficient is assumed to be constant in a practical range.

In the above-described method of measuring length by two-wavelength lightwave interferometry, the correction of atmospheric refractive index is carried out using the term A(D2-D1). However, the uncertainty in (D2-D1) is magnified A times, thereby hampering the realization of a two-wavelength laser interferometry length measurement system.

One of various causes for the uncertainty described above would be the large effect on measurement precision brought about by misalignment in the optical axes of the two different-wavelength lightwaves. A typical two-wavelength laser light sources does not perfectly coaxially emit the two different-wavelength laser beams. Such laser beams exhibit an angular misalignment in the order of, for example, 0.3 mrad. When such optical axis misalignment is present, the optical path lengths of the laser beams having the respective wavelengths may differ from each other, which is considered greatly influential on measurement precision.

## SUNEMLARY OF THE INVENTION

An object of the invention, focusing on misalignment in the optical axes of two different-wavelength laser beams emitted from a two-wavelength laser light source, is to reduce such misalignment in the optical axes of the two different-wavelength laser beams. Specifically, the invention provides a two-wavelength laser interferometer capable of reducing error of measurement brought about by optical axis misalignment and conducting a measurement with high precision, and a method of adjusting optical axis in the two-wavelength laser interferometer.

A two-wavelength laser interferometer according to an aspect of the invention includes: a two-wavelength laser light source that emits two laser beams having different wavelengths; a beam splitter that splits each of the two laser beams having the different wavelengths emitted from the two-wavelength laser light source into a reference beam and a measurement beam; a beam superposer that superposes the reference beam and the measurement beam split by the beam splitter and reflected by a reference surface and a target measurement surface together; and a calculator that obtains a displacement amount of the target measurement surface per wavelength from the beams superposed together by the beam superposer and obtains a displacement amount of the target measurement surface applied with atmospheric refractive index correction through a calculation in which the displacement amount obtained per wavelength is used, in which an optical-axis superposer is provided between the two-wavelength laser light source and the beam splitter, the optical-axis superposer initially separating the two laser beams having different wavelengths emitted from the two-wavelength laser light source and subsequently superposing optical axes of the two laser beams together.

According to this configuration, the optical-axis superposer for initially separating the two laser beams having different wavelengths emitted from the two-wavelength laser light source and subsequently superposing the optical axes of the two laser beams together is provided between the two-wavelength laser light source and the beam splitter. Thus, the optical axes of the two different-wavelength laser beams can be brought into coincidence. Accordingly, since the laser beams of the respective wavelengths less frequently differ from each other in optical path length, the error of measurement brought about by optical axis misalignment can be reduced, thereby realizing a high precision measurement.

Preferably in the two-wavelength laser interferometer according to the invention, the optical-axis superposer includes: a first optical element that separates the two laser beams having the different wavelengths emitted from the two-wavelength laser light source into a first laser beam and a second laser beam according to wavelength; a second optical element that reflects the first laser beam separated by the first optical element to a predetermined position; a third optical element that reflects the second laser beam separated by the first optical element to the predetermined position; and a fourth optical element that, at the predetermined position, transmits the second laser beam reflected by the third optical element and reflects the first laser beam reflected by the second optical element so that an optical axis of the first laser beam coincides with an optical axis of the second laser beam.

For the first optical element and the fourth optical element, for example, a harmonic separator or a dichroic mirror can be used. Furthermore, reflection mirrors can be used for the second optical element and the third optical element.

According to this configuration, in the first optical element, the two different-wavelength laser beams emitted from the two-wavelength laser light source are separated into the first laser beam and the second laser beam according to the wavelength. The first laser beam and the second laser beam are respectively reflected by the second optical element and the third optical element toward the predetermined position. At this time, the fourth optical element transmits the second laser beam having been reflected to the predetermined position while reflecting the first laser beam so that its optical axis coincides with that of the second laser beam. Resultantly, the optical axes of the first laser beam and second laser beam are superposed together. Accordingly, the optical-axis superposer, which is provided by a combination of the four optical elements, can be prepared at comparatively low cost. In addition, any work for adjustment can be carried out easily because adjustment for superposition can be performed by merely adjusting the angles of each of the optical elements.

Preferably in the two-wavelength laser interferometer according to the invention, the first optical element and the third optical element transmit the first laser beam and reflect the second laser beam, and the second optical element and the fourth optical element transmit the second laser beam and reflect the first laser beam.

For the first to the fourth optical elements, for example, a harmonic separator or a dichroic mirror can be used.

According to this configuration, the first optical element transmits the first laser beam while reflecting the second laser beam. At this time, if the second laser beam is partially transmitted by the first optical element (i.e., if beam leakage occurs in the first optical element), the leaked second laser beam may arrive at the second optical element and have an effect on measurement precision. Furthermore, if the first laser beam is partially reflected by the first optical element (i.e., if beam leakage occurs in the first optical element), the leaked first laser beam may arrive at the third optical element and have an effect on measurement precision.

According to the aspect of the invention, since the beam leaked in the first optical element is transmitted by the second optical element and the third optical element, the effect of beam leakage in the first optical element can be reduced, thereby realizing a higher precision measurement.

Preferably in the two-wavelength laser interferometer according to aspect of the invention, the beam splitter and the beam superposer are provided by a two-wavelength polarizing beam splitter, and the two-wavelength polarizing beam splitter includes a combination of: a first-laser-beam polarizing beam splitter that, of the two laser beams having the different wavelengths, functions for the first laser beam and transmits the second laser beam; and a second-laser-beam polarizing beam splitter that, of the two laser beams having the different wavelengths, functions for the second laser beam and transmits the first laser beam.

According to this configuration, the two-wavelength polarizing beam splitter is provided by a combination of the first-laser-beam polarizing beam splitter that functions for the first laser beam and transmits the second laser beam and the second-laser-beam polarizing beam splitter that functions for the second laser beam and transmits the first laser beam. Thus, the two-wavelength polarizing beam splitter is applicable to two wavelengths that exhibit such a great difference as in 532 nm and 1064 nm.

Accordingly, since there is no need to split the optical paths for each of the laser beam per wavelength, the number of optical components that are required can be reduced, and assembly and adjustment can be facilitated, thereby realizing an overall reduction in cost.

A method of adjusting optical axes in a two-wavelength laser interferometer according to another aspect of the invention is a method of adjusting optical axes in the above-described two-wavelength laser interferometer, the optical axes being optical axes of the two laser beams having the different wavelengths emitted from the two-wavelength laser light source, the method including: arranging a detector on the optical axis of at least one beam of the reference beam and the measurement beam split by the beam splitter; and adjusting any one of the optical elements in the optical-axis superposer to reduce an amount of beam misalignment detected by the detector while checking the amount of beam misalignment.

According to this aspect, the method of adjusting the optical axes of the two different-wavelength laser beams, in which: the detector is arranged on the optical axis of at least one beam of the reference beam and the measurement beam split by the beam splitter; and any one of the optical elements in the optical-axis superposer is adjusted to reduce the amount of beam misalignment detected by the detector while the amount of beam misalignment is being checked, can facilitate work for adjustment In other words, since the superposition of the optical axes can be adjusted by merely adjusting the angles of the optical elements each, work for adjustment can be facilitated.

## BRIEF DESCRIPTION OF THE DRAWINGS

Fig. 1 is a diagram showing a two-wavelength laser interferometer according to a first exemplary embodiment of the invention.
Fig. 2 is a diagram showing an optical-axis-superposition optical system according to the first exemplary embodiment.
Fig. 3 is a block diagram showing optical axis adjustment being carried out according to the first exemplary embodiment.
Fig. 4 is a diagram showing a first modification of the optical-axis-superposition optical system according to the first exemplary embodiment.
Fig. 5 is a diagram showing a second modification of the optical-axis-superposition optical system according to the first exemplary embodiment.
Fig. 6 is a diagram showing a two-wavelength laser interferometer according to a second exemplary embodiment of the invention.
Fig. 7 is a diagram showing a modification of the first exemplary embodiment.
Fig. 8 is a diagram showing a modification of the second exemplary embodiment.

## DETAILED DESCRIPTION OF PREFERRED EMBODIMENT(S)

An exemplary embodiment of the invention will be explained below with reference to the diagrams.

<First Exemplary embodiment>

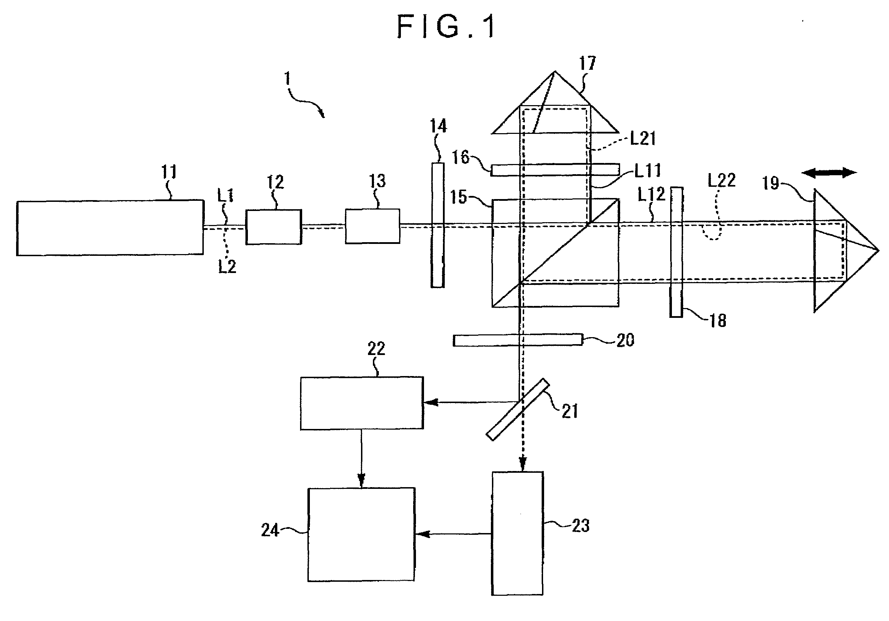

(Entire Structure of the Two-Wavelength Laser Interferometer 1: See Fig. 1)

As shown in Fig. 1, a two-wavelength laser interferometer 1 according to a first exemplary embodiment is provided by a Michelson-type interferometer. In such a Michelson-type interferometer, two laser beams L1 and L2 having different wavelengths are each split into reference beams L11 and L21 and measurement beams L12 and L22, and the reference beams L11 and L21 and measurement beams L12 and L22 are reflected from a reference surface and a target measurement surface and then superposed together. The beam superposed together is separated per wavelength and detected to obtain an amount of displacement of the target measurement surface. Through a calculation using the displacement amount obtained per wavelength, an amount of displacement of the target measurement surface applied with an atmospheric refractive index correction is obtained.

Specifically, the two-wavelength laser interferometer 1 include: a two-wavelength laser light source 11 that emits two laser beams L1 and L2 having different wavelengths; a two-wavelength beam expander 12 arranged on the emission side of the two-wavelength laser light source 11; an optical-axis-superposition optical system 13 (optical-axis superposer), a two-wavelength half-wave plate 14, and a two-wavelength polarizing beam splitter 15 arranged at downstream of the beam expander 12; a two-wavelength quarter-wave plate 16 and a two-wavelength corner cube 17 arranged in an optical path of the reference beams L11 and L21 from the two-wavelength polarizing beam splitter 15; a two-wavelength quarter-wave plate 18 and a two-wavelength corner cube 19 arranged in an optical path of the measurement beams L12 and L22 from the two-wavelength polarizing beam splitter 15; a two-wavelength half-wave plate 20 and a dichroic mirror 21 arranged in an optical path of a beam generated by the superposition of the reference beams L11 and L21 and the measurement beams L12 and L22; detectors 22 and 23 that detect an interference signal from beams separated per wavelength by the dichroic mirror 21; and a calculator 24 that calculates the amount of displacement of the target measurement surface from the interference signals detected by the detectors 22 and 23.

Of the configuration components of the two-wavelength laser interferometer 1 mentioned above, the two-wavelength beam expander 12, the optical-axis-superposition optical system 13, the two-wavelength half-wave plates 14 and 20, the two-wavelength polarizing beam splitter 15, the two-wavelength quarter-wave plates 16 and 18 and the two-wavelength corner cubes 17 and 19 are configured to function on the wavelengths of the two laser beams L1 and L2 emitted from the two-wavelength laser light source 11.

The two-wavelength laser light source 11 uses a two-wavelength laser light source that emits two laser beams L1 and L2 having different wavelengths along the same axis, such as an Nd:YAG laser, which exemplarily emits a first laser beam L1 with a wavelength of 532 nm and a second laser beam L2 with a wavelength of 1064 nm along the same axis.

The two-wavelength beam expander 12 enlarges the beam diameter of each of the two different-wavelength laser beams L1 and L2 emitted from the two-wavelength laser light source 11 and directs them to the optical-axis-superposition optical system 13.

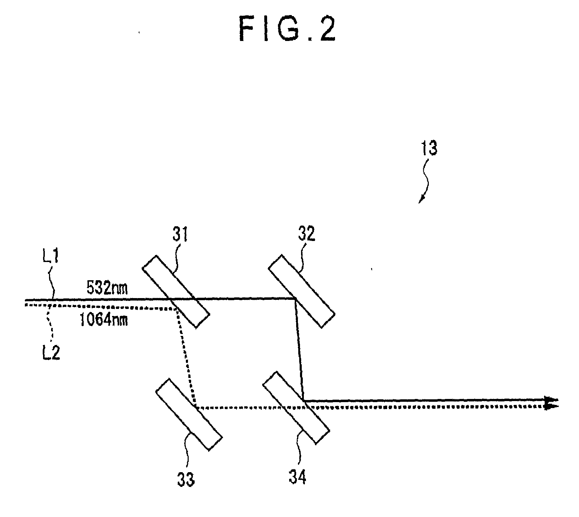

The optical-axis-superposition optical system 13 will be explained later with reference to Fig. 2.

The two-wavelength polarizing beam splitter 15, which is configured from a single part, provides: a beam splitter for splitting each of the different-wavelength laser beams L1 and L2, of which polarization orientation has been inclined by the two-wavelength half-wave plate 14, into the reference beams L11 and L21 and the measurement beams L12 and L22; and a beam superposer for superposing the reference beams L11 and L21 and measurement beams L12 and L22 reflected by the two-wavelength corner cubes 17 and 19 together so that the reference beams and the measurement beams are interfered with each other.

The dichroic mirror 21 separates the laser beams L1 and L2 that have been transmitted through the two-wavelength half-wave plate 20 according to their wavelengths, and directs the laser beams L1 and L2 respectively to the detectors 22 and 23.

The detectors 22 and 23 detect the interference signals from the beams that have been separated by the dichroic mirror 21 according to their wavelengths, and direct the interference signals to the calculator 24.

The calculator 24 obtains the displacement amounts of the target measurement surface from the interference signals detected by the detectors 22 and 23 respectively, and calculates an amount of displacement of the target measurement surface applied with an atmospheric refractive index correction through a calculation using the obtained displacement amounts. Here, where D1 and D2 respectively represent the displacement amounts obtained from the beams of the respective wavelengths, the amount of displacement D of the two-wavelength corner cube 19, which is the target measurement surface applied with an atmospheric refractive index correction, can be obtained from the following formulae:

$$D = D2 - A(D2 - D1) \quad \ldots (1)$$

$$A = (n2 - 1)/(n2 - n1) \quad \ldots (2)$$

In the formula, n1 and n2 represent the atmospheric refractive indexes for the wavelengths of the laser beams corresponding to D1 and D2.

(Structure of Optical-Axis-Superposition Optical System 13: See Fig. 2)

As shown in Fig. 2, the optical-axis-superposition optical system 13 includes: a harmonic separator 31 (first optical element) for separating the laser beams having differing wavelengths emitted from the two-wavelength laser light source 11 into the first laser beam L1 and the second laser beam L2 according to the wavelength; a reflection mirror 32 (second optical element) for reflecting the first laser beam L1 separated by the harmonic separator 31 to a predetermined position; a reflection mirror 33 (third optical element) for reflecting the second laser beam L2 separated by the harmonic separator 31 to a predetermined position; and a harmonic separator 34 (fourth optical element) that, at the predetermined position, transmits the second laser beam L2 reflected by the reflection mirror 33 and reflects the first laser beam L1 reflected by the reflection mirror 32 so that its optical axis matches the optical axis of the second laser beam L2.

The harmonic separator 31 transmits the first laser beam L1 (with a wavelength of 532 nm), and reflects the second laser beam L2 (with a wavelength of 1064 nm).

The harmonic separator 34 transmits the second laser beam L2 (with the wavelength of 1064 nm), and reflects the first laser beam L1 (with the wavelength of 532 nm).

The reflection mirrors 32 and 33 and the harmonic separators 31 and 34 are all configured so that their angles of inclination can be adjusted.

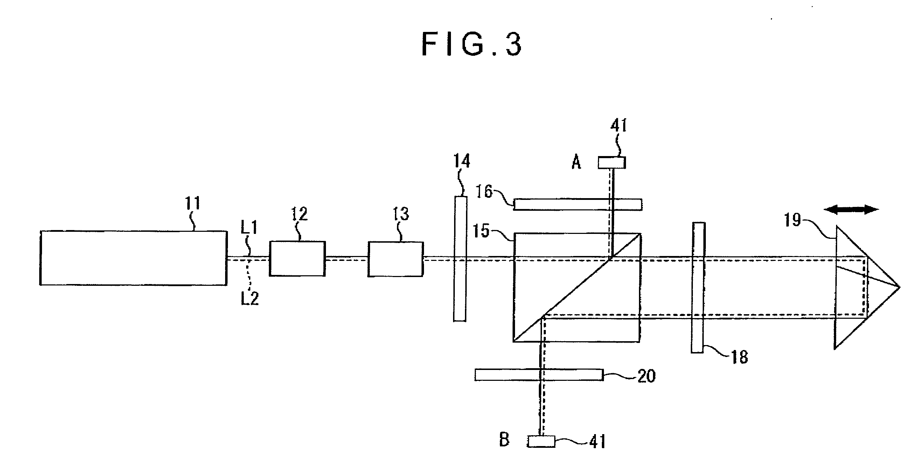

(Optical Axis Adjustment Method: See Fig. 3)

For optical axis adjustment, examination points are provided at two locations-respectively as a proximal point and a distal point on the optical path of the light that has been transmitted through the optical-axis-superposition optical system 13.

As shown in Fig. 3, the proximal point examination location A is provided in place of the two-wavelength corner cube 17, while the distal point examination location B is provided in place of the optical system from the dichroic mirror 21 onwards. At this time, it is preferable that the two-wavelength corner cube 19 is arranged sufficiently distally.

A detector 41 such as a photodiode (for example, a four-segment photodiode) or a beam profiler is arranged at the proximal point examination location A and the distal point examination location B. Since the examinations at the proximal point examination location A and the distal point examination location B are alternately carried out, a single detector 41 should suffice.

After the detector 41 has been arranged, the misalignment amounts in the first laser beam L1 and the second laser beam L2 detected by the detection device 41 at the proximal point examination location A and the distal point examination location B are alternately checked, and the optical axes of the laser beams L1 and L2 are brought into coincidence by adjusting the angle of any one of the optical elements 31 to 34 to reduce the amount of misalignment in the laser beams L1 and L2.

This configuration can also cope with misalignment of optical axis in the laser beams L1 and L2 generated internally in the two-wavelength laser interferometer 1.

(Explanation of Operation(s) of Two-Wavelength laser Interferometer 1)

First, the different-wavelength laser beams L1 and L2 are emitted from the two-wavelength laser light source 11. In this example, the different-wavelength laser beams L1 and L2 exemplarily have an S-polarized polarization inclination.

After the beam diameters of the different-wavelength laser beams L1 and L2 emitted from the two-wavelength laser light source 11 are enlarged by the two-wavelength beam expander 12, the laser beams L1 and L2 are adjusted by the optical-axis-superposition optical system 13 so that their optical axes are in coincidence with each other.

First, of the different-wavelength laser beams L1 and L2, the harmonic separator 31 transmits the first laser beam L1 and reflects the second laser beam L2. With the harmonic separator 31, the first laser beam L1 and the second laser beam L2 are resultantly separated.

The first laser beam L1, which is transmitted by the harmonic separator 31, is reflected at the reflection mirror 32 and directed to the harmonic separator 34. The second laser beam L2, which is reflected by the harmonic separator 31, is reflected at the reflection mirror 33 and also directed to the harmonic separator 34.

The harmonic separator 34 transmits the second laser beam L2 reflected by the reflection mirror 33, and reflects the first laser beam L1 reflected by the reflection mirror 32 so that its optical axis matches the optical axis of the second laser beam L2. Through this operation, the first laser beam L1 and the second laser beam L2 arrive at the two-wavelength half-wave plate 14 with their optical axes superposed together.

The laser beams L1 and L2, of which optical axes have been adjusted to coincide with each other by the optical-axis-superposition optical system 13, simultaneously undergo a 45° inclination of their polarization orientation at the two-wavelength half-wave plate 14. Then, the laser beams L1 and L2 are both split by the two-wavelength polarizing beam splitter 15 into S-polarized reference beams L11 and L21 and P-polarized measurement beams L12 and L22.

The S-polarized reference beams L11 and L21 are transmitted through the two-wavelength quarter-wave plate 16 and head toward the two-wavelength corner cube 17, which is a reference surface in a constantly fixed location. After the S-polarized reference beams L11 and L21 are reflected by the two-wavelength corner cube 17, they are transmitted through the two-wavelength quarter-wave plate 16 and become P-polarized, and then transmitted through the two-wavelength polarizing beam splitter 15.

The P-polarized measurement beams L12 and L22 are transmitted through the two-wavelength quarter-wave plate 18 and head toward the two-wavelength corner cube 19 fixed to the target measurement surface. After the P-polarized measurement beams L12 and L22 are reflected by the two-wavelength corner cube 19, they are transmitted through the two-wavelength quarter-wave plate 18 and become S-polarized, and then reflected by the two-wavelength polarizing beam splitter 15. Subsequently, the measurement beams L12 and L22 are superposed together and interfered with the reference beams L11 and L21.

The interfering beam made from the measurement beams L12 and L22 and the reference beams L11 and L21 is transmitted through the two-wavelength half-wave plate 20 and undergoes a 45° inclination of its polarization orientation. The interfering beam subsequently arrives at the dichroic mirror 21 to be separated into beams according to wavelength. Then, the separated beams are incident upon the detectors 22 and 23 respectively. The detectors 22 and 23 obtain two-phase sine wave signals as 90°-phase-shifted interference signals for the wavelengths each. After adjustment for amplitude, offset, phase and the like, the two-phase sine wave signals are sent to the calculator 24. The calculator 24 uses the two-phase sine wave signals for the wavelengths each, and obtains a length measurement value for each wavelength. The calculator 24 also obtains the amount of displacement D applied with an atmospheric refractive index correction from the length measurement values for the wavelengths each and the above-mentioned formulae (1) and (2).

In other words, where D1 and D2 respectively represent the displacement amounts obtained from the beams of the respective wavelengths, the amount of displacement D applied with an atmospheric refractive index correction can be obtained from the following formulae:

$$D = D2 - A(D2 - D1) \quad \ldots(1)$$

$$A = (n2 - 1)/(n2 - n1) \quad \ldots(2)$$

In the formula, n1 and n2 represent the atmospheric refractive indexes for the wavelengths of the laser beams corresponding to D1 and D2.

<Modifications of the First Exemplary embodiment>

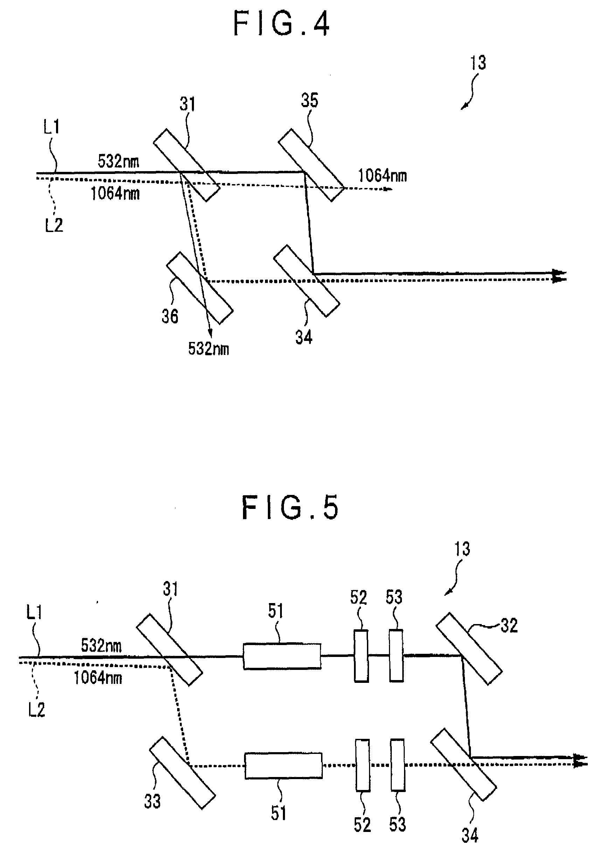

(First Modification of the Optical-Axis-Superposition Optical System 13: See Fig. 4)

The optical-axis-superposition optical system 13 shown in Fig. 2 is provided by two harmonic separators 31 and 34 and two reflection mirrors 32 and 33. On the other hand, the optical-axis-superposition optical system 13 shown in Fig. 4 is exemplarily provided by harmonic separators 35 and 36 used in place of the reflection mirrors 32 and 33. In other words, all of the optical elements are provided by the harmonic separators 31,34,35 and 36 in the optical system 13 shown in Fig. 4.

The harmonic separators 31 and 36 transmit the first laser beam L1 (with a wavelength of 532 nm) and reflect the second laser beam L2 (with a wavelength of 1064 nm), while the harmonic separators 35 and 34 transmit the second laser beam L2 (with a wavelength of 1064 nm) and reflect the first laser beam L1 (with a wavelength of 532 nm).

It is also possible to use a dichroic mirror or the like in place of the harmonic separators 31, 34, 35 and 36.

With this configuration, the harmonic separator 31 transmits the first laser beam L1 while reflecting the second laser beam L2. At this time, if the second laser beam L2 is partially transmitted by the harmonic separator 31 (i.e., if light leakage occurs in the harmonic separator 31), the transmitted second laser beam L2 may arrive at the harmonic separator 35 and affect measurement precision Meanwhile, if the first laser beam L1 is partially reflected by the harmonic separator 31 (i.e., if light leakage occurs in the harmonic separator 31), the reflected first laser beam L1 may arrive at the harmonic separator 36 and affect measurement precision.

In the present modification, any light that is leaked at the harmonic separator 31 is transmitted through the harmonic separator 35 and the harmonic separator 36, which reduces the effect of any light leakage in the harmonic separator 31 and contributes to the realization of higher precision measurement.

(Second Modification of Optical-Axis-Superposition Optical System 13: See Fig. 5)

The optical-axis-superposition optical system 13 shown in Fig. 5 is exemplarily configured by interposing a beam expander 51, a polarizer 52 and a wave plate 53 between the harmonic separator 31 and the reflection mirror 32 and between the reflection mirror 33 and the harmonic separator 34 in the optical-axis-superposition optical system 13 of the first exemplary embodiment.

With this arrangement, beam expanders 51 specialized for each individual wavelength can be used.

Beam expanders that can handle two wavelengths can be expensive, but the arrangement described above can contribute to cost reduction. Furthermore, with introduction of the polarizer 52 and the wave plate 53, the light intensity (polarizer 52) and the polarization orientation (wave plate 53) can be set easily per wavelength, which contributes to excellent operability.

<Second Exemplary Embodiment>

The two-wavelength laser interferometer according to the first exemplary embodiment exemplarily uses a single polarizing beam splitter that functions as the two-wavelength polarizing beam splitter 15. However, the two-wavelength polarizing beam splitter may be provided by a combination of a plurality of polarizing beam splitters.

When light having a wavelength other than the specified wavelength is incident upon a normal polarizing beam splitter, such a normal polarizing beam splitter may affect and reflect such light even when such light is P-polarized light. Accordingly, a simple combination of polarizing beam splitters is not usable as a two-wavelength polarizing beam splitter.

Recent developments in optical thin film technology have made possible the manufacture of polarizing beam splitters that function for laser beams of certain wavelengths while transmitting laser beams of the other wavelengths without affecting. Accordingly, in the second exemplary embodiment, use of a combination of single-wavelength polarizing beam splitters will be described.

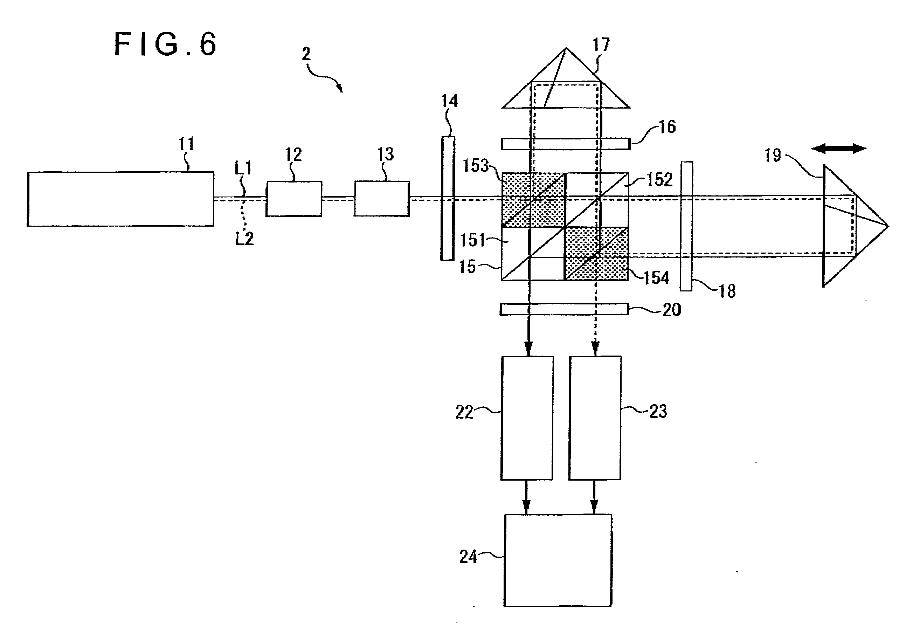

(Entire Structure of the Two-Wavelength Laser Interferometer 1: See Fig. 6)

A two-wavelength laser interferometer 2 according to the second exemplary embodiment is a two-wavelength laser interferometer that uses a two-wavelength polarizing beam splitter provided by a combination of the polarizing beam splitters described above so as to be applicable to two wavelengths that exhibit such a great difference as 532 nm and 1064 nm.

Fig. 6 shows a two-wavelength laser interferometer 2 according to the second exemplary embodiment In the explanation for Fig. 6, the same reference numerals will be used for components that are the same as those in the first exemplary embodiment, and so their explanations will be omitted or simplified.

The two-wavelength polarizing beam splitter 15 used in the two-wavelength laser interferometer 2 according to the second exemplary embodiment includes a combination of: two first-laser-beam polarizing beam splitters 151 and 152 that function for a first laser beam L1 (with a wavelength of 532 nm) but transmit a second laser beam L2 (with a wavelength of 1064 nm); and two second-laser-beam polarizing beam splitters 153 and 154 that function for the second laser beam L2 (with a wavelength of 1064 nm) but transmit the first laser beam L1 (with a wavelength of 532 nm). Specifically, the two first-laser-beam polarizing beam splitters 151 and 152 and the two second-laser-beam polarizing beam splitters 153 and 154 are arranged and combined at locations respectively diagonally opposite each other in a square-shaped configuration.

(Explanation of Operation(s) of Two-Wavelength Laser Interferometer 2)

The two different-wavelength laser beams L1 and L2 emitted from the two-wavelength laser light source 11 are transmitted through the two-wavelength beam expander 12, the optical-axis-superposition optical system 13 and the two-wavelength half-wave plate 14, and are simultaneously incident upon the second laser beam polarizing beam splitter 153, whereupon the second-laser-beam polarizing beam splitter 153 functions for the second laser beam L2 and transmits the first laser beam L1.

The S-polarized beam component (reference beam) of the second laser beam L2 incident upon the second-laser-beam polarizing beam splitter 153 is transmitted through the two-wavelength quarter-wave plate 16 and reflected by the two-wavelength corner cube 17. Then, the beam component is transmitted through the two-wavelength quarter-wave plate 16, and becomes P-polarized. Then, after being transmitted through the first-laser-beam polarizing beam splitter 152 and the second-laser-beam polarizing beam splitter 154 sequentially, the beam component is transmitted through the two-wavelength half-wave plate 20 to undergo a 45° inclination of polarization orientation and arrives at the detector 23.

The P-polarized beam component (measurement beam) of the second laser beam L2 incident upon the second-laser-beam polarizing beam splitter 153 is transmitted through the first-laser-beam polarizing beam splitter 152 and the two-wavelength quarter-wave plate 18, and reflected by the two-wavelength corner cube 19. Then, the beam component is transmitted through the two-wavelength quarter-wave plate 18, and becomes S-polarized. Then, after being reflected by the second-laser-beam polarizing beam splitter 154 to interfere with the reference beam, the beam component is transmitted through the two-wavelength half-wave plate 20 to undergo a 45° inclination of polarization orientation and arrives at the detector 23.

The first-laser-beam polarizing beam splitter 152 reflects upwardly in Fig. 6 the S-polarized beam component (reference beam) of the first laser beam L1 that has been directly transmitted through the second-laser-beam polarizing beam splitter 153, so that the S-polarized beam component is transmitted through the two-wavelength quarter-wave plate 16 and reflected by the two-wavelength corner cube 17. Then, the beam component is transmitted through the two-wavelength quarter-wave plate 16 and becomes P-polarized. Then, after being transmitted through the second-laser-beam polarizing beam splitter 153 and the first-laser-beam polarizing beam splitter 151 sequentially, the beam component is transmitted through the two-wavelength half-wave plate 20 to undergo a 45° inclination of polarization orientation and arrives at the detector 22.

The first-laser-beam polarizing beam splitter 152 directly transmits the P-polarized beam component (measurement beam) of the first laser beam L1 that has been directly transmitted through the second-laser-beam polarizing beam splitter 153, so that the P-polarized beam component is transmitted through the two-wavelength quarter-wave plate 18 and reflected by the two-wavelength corner cube 19. Then, the beam component is transmitted through the two-wavelength quarter-wave plate 18 and becomes S-polarized. Then, after being transmitted through the second-laser-beam polarizing beam splitter 154 and being reflected by the first-laser-beam polarizing beam splitter 151 to interfere with the reference beam, the beam component is transmitted through the two-wavelength half-wave plate 20 to undergo a 45° inclination of polarization orientation and arrives at the detector 22.

The processing that follows in the detectors 22 and 23 and the calculator 24 is the same as the processing in the first exemplary embodiment. Accordingly, its explanation will be omitted.

<Modifications>

The invention is not limited to the above described exemplary embodiments, and accordingly includes any modifications and improvements as long as such modifications and improvements are compatible with the invention.

The first exemplary embodiment and the second exemplary embodiment have a single path configuration. However, according to the aspect of the invention, a combination of the two-wavelength polarizing beam splitters and the two-wavelength wave plates can optically enhance a resolution capability of a length measurement using the laser beams of different wavelengths by multiplying the length of the optical path, and can contribute to a two-wavelength laser interferometer in which any increase in uncertainty due to the A coefficient is reduced.. With this configuration in which a double path is employed, so compared to the configurations in the first and second exemplary embodiments, the resolution capability of measurement using each of the wavelengths can be doubly enhanced, and any increase in uncertainty due to the A coefficient can be reduced. Thus, a higher precision two-wavelength laser interferometer can be obtained.

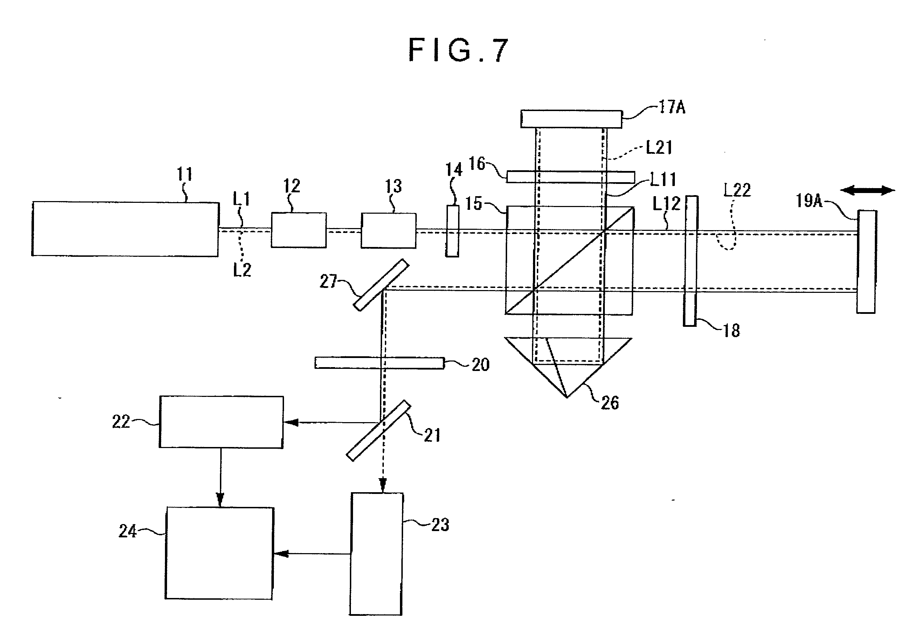

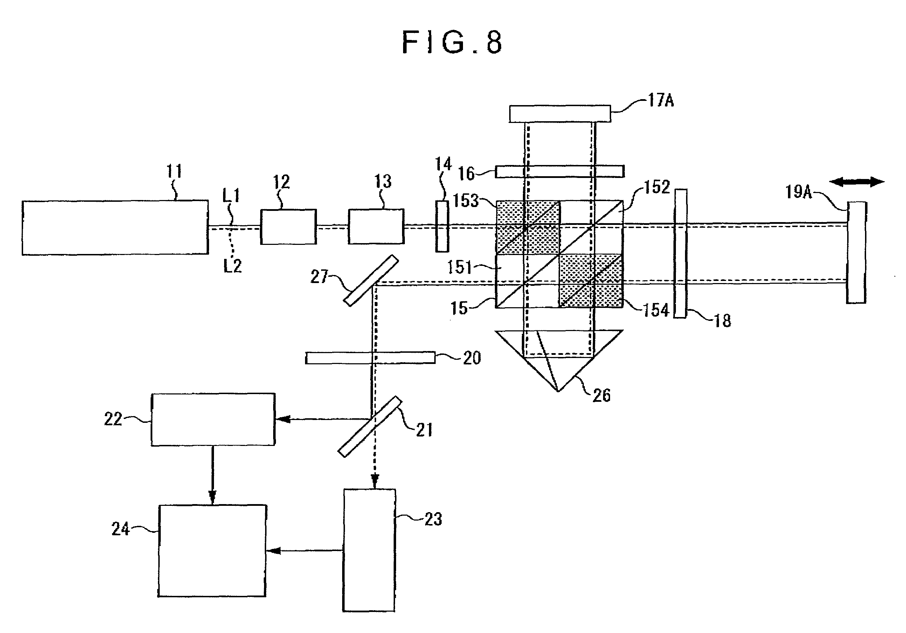

Next, Fig. 7 specifically shows a configuration in which a two-wavelength polarizing beam splitter provided by a single unit is used while Fig. 8 specifically shows a configuration in which a two-wavelength polarizing beam splitter provided by a combination of four single wavelength polarizing beam splitters is used.

(Optical Path Multiplication in First Exemplary embodiment: See Fig. 7)

In this example of optical path multiplication, flat mirrors 17A and 19A are provided in place of the two-wavelength corner cubes 17 and 19 according to the first exemplary embodiment. A two-wavelength corner cube 26 is arranged opposite the flat mirror 17A with the two-wavelength polarizing beam splitter 15 interposed therebetween, while a flat mirror 27 is arranged opposite the two-wavelength quarter-wave plate 18 with the two-wavelength polarizing beam splitter 15 interposed therebetween.

With this configuration, when the two different-wavelength laser beams L1 and L2 emitted from the two-wavelength laser light source 11 are transmitted through the two-wavelength beam expander 12, the optical-axis-superposition optical system 13 and the two-wavelength half-wave plate 14 to be simultaneously incident upon the two-wavelength polarizing beam splitter 15, they are both split by the two-wavelength polarizing beam splitter 15 respectively into S-polarized reference beams L11 and L21 and P-polarized measurement beams L12 and L22.

The S-polarized reference beams L11 and L21, which are vertically split (upward in Fig. 7) by the two-wavelength polarizing beam splitter 15, are transmitted through the two-wavelength quarter-wave plate 16 and head toward the flat mirror 17A, which is a constantly fixed reference surface. After being reflected by the flat mirror 17A, the reference beams are transmitted through the two-wavelength quarter-wave plate 16 and become P-polarized, then transmitted through the two-wavelength polarizing beam splitter 15, and reflected by the two-wavelength corner cube 26. Then, reference beams are transmitted through the two-wavelength polarizing beam splitter 15 and the two-wavelength quarter-wave plate 16 sequentially and arrive at the flat mirror 17A. Then, after the reference beams L11 and L21 are reflected by the flat mirror 17A, they are transmitted through the two-wavelength quarter-wave plate 16 and become S-polarized, then reflected at the two-wavelength polarizing beam splitter 15 and head toward the flat mirror 27. After being reflected by the flat mirror 27, the reference beams are transmitted through the two-wavelength half-wave plate 20 to undergo a 45° inclination of polarization orientation. Subsequently, the reference beams are separated per wavelength by the dichroic mirror 21 and then the separated beams arrives at the detectors 22 and 23 respectively.

The P-polarized measurement beams L12 and L22, which are horizontally split (rightward in Fig. 7) by the two-wavelength polarizing beam splitter 15, are transmitted through the two-wavelength quarter-wave plate 18 and head toward the flat mirror 19A which is a fixed on the target measurement surface. After being reflected by the flat mirror 19A, the measurement beams are transmitted through the two-wavelength quarter-wave plate 18 and become S-polarized. Then, the measurement beams are reflected by the two-wavelength polarizing beam splitter 15 to be reflected by the two-wavelength corner cube 26, and again reflected by the two-wavelength polarizing beam splitter 15, so that the measurement beams are transmitted through the two-wavelength quarter-wave plate 18 to head toward the flat mirror 19A. After being reflected by the flat mirror 19A, the measurement beams are again transmitted through the two-wavelength quarter-wave plate 18 and become P-polarized. Then, the measurement beams are transmitted through the two-wavelength polarizing beam splitter 15 and head toward the flat mirror 27. After being reflected by the flat mirror 27, the measurement beams are transmitted through the two-wavelength half-wave plate 20 to undergo a 45° inclination of polarization orientation, and then are separated per wavelength by the dichroic mirror 21. Subsequently, the separated beams arrive at the detectors 22 and 23 respectively.

The processing that follows in the detectors 22 and 23 and the calculator 24 is the same as that in the first exemplary embodiment. Accordingly, its explanation will be omitted.

(Optical Path Multiplication in Second Exemplary Embodiment: See Fig. 8)

In this example of optical path multiplication, flat mirrors 17A and 19A are provided in place of the two-wavelength corner cubes 17 and 19 according to the second exemplary embodiment. A two-wavelength corner cube 26 is arranged opposite the flat mirror 17A with the two-wavelength polarizing beam splitter 15 interposed therebetween, while a flat mirror 27 is arranged opposite the two-wavelength quarter-wave plate 18 with the two-wavelength polarizing beam splitter 15 interposed therebetween.

In this configuration, when the two different-wavelength laser beams L1 and L2 emitted from the two-wavelength laser light source 11 are transmitted through the two-wavelength beam expander 12, the optical-axis-superposition optical system 13 and the two-wavelength half-wave plate 14 to be simultaneously incident upon the two-wavelength polarizing beam splitter 15, the second-laser-beam polarizing beam splitter 153 functions for the second laser beam L2 and transmits the first laser beam L1.

The S-polarized beam component of the second laser beam L2 incident upon the second-laser-beam polarizing beam splitter 153 is transmitted through the two-wavelength quarter-wave plate 16 and reflected by the flat mirror 17A. Then, the beam component is transmitted through the two-wavelength quarter-wave plate 16, and becomes P-polarized. Then, after being transmitted through the second-laser-beam polarizing beam splitter 153 and the first-laser-beam polarizing beam splitter 151, the beam component is reflected by the two-wavelength corner cube 26 to be sequentially transmitted through the second-laser-beam polarizing beam splitter 154, the first-laser-beam polarizing beam splitter 152 and the two-wavelength quarter-wave plate 16. Subsequently, the beam component arrives at the flat mirror 17A. After being reflected by the flat mirror 17A, the beam component is transmitted through the two-wavelength quarter-wave plate 16 again and become S-polarized and then transmitted through the first-laser-beam polarizing beam splitter 152. Then, the second-laser-beam polarizing beam splitter 154 reflects the beam component, so that the beam component is transmitted through the first-laser-beam polarizing beam splitter 151 to arrive at the flat mirror 27. After being reflected by the flat mirror 27, the beam component simultaneously experiences a 45° inclination of polarization orientation at the two-wavelength half-wave plate 20. Subsequently, the beam component is separated per wavelength by the dichroic mirror 21 and then arrives at the detectors 22 and 23 respectively.

The P-polarized beam component of the second laser beam L2 incident upon the second-laser-beam polarizing beam splitter 153 is transmitted through the first-laser-beam polarizing beam splitter 152 and the two-wavelength quarter-wave plate 18 sequentially. Then, the flat mirror 19A reflects the beam component, so that the beam component is transmitted through the two-wavelength quarter-wave plate 18 to become S-polarized. Then, after being transmitted through the first-laser-beam polarizing beam splitter 152, the second-laser-beam polarizing beam splitter 153 reflects the beam component, so that the beam component is transmitted through the first-laser-beam polarizing beam splitter 151 and reflected by the two-wavelength corner cube 26. Subsequently, the second-laser-beam polarizing beam splitter 154 reflects the beam component, so that the beam component is transmitted through the two-wavelength quarter-wave plate 18 to arrive at the flat mirror 19A. After being reflected by the flat mirror 19A, the beam component is again transmitted through the two-wavelength quarter-wave plate 18 and become P-polarized. Then, the beam component is transmitted through the second-laser-beam polarizing beam splitter 154 and the first-laser-beam polarizing beam splitter 151 sequentially and arrives at the flat mirror 27. After being reflected by the flat mirror 27, the beam component simultaneously experiences a 45° inclination of polarization orientation at the two-wavelength half-wave plate 20. Subsequently, the beam component is separated per wavelength by the dichroic mirror 21 and then arrives at the detectors 22 and 23 respectively.

Of the first laser beam L1 that has been directly transmitted through the second-laser-beam polarizing beam splitter 153, the first-laser-beam polarizing beam splitter 152 splits the S-polarized beam component and directs the beam component to flow upwardly in the drawing, so that the S-polarized beam component is transmitted through the two-wavelength quarter-wave plate 16 and reflected by the flat mirror 17A. Then, the beam component is transmitted through the two-wavelength quarter-wave plate 16 and becomes F-polarized. Then, after being transmitted through the first-laser-beam polarizing beam splitter 152 and the second-laser-beam polarizing beam splitter 154, the beam component is reflected by the two-wavelength corner cube 26, so that the beam component is transmitted through the first-laser-beam polarizing beam splitter 151, the second-laser-beam polarizing beam splitter 153 and the two-wavelength quarter-wave plate 16 sequentially to arrive at the flat mirror 17A. After being reflected by the flat mirror 17A, the beam component is transmitted through the two-wavelength quarter-wave plate 16 and become S-polarized. Then, the beam component is transmitted through the second-laser-beam polarizing beam splitter 153 and reflected by the first-laser-beam polarizing beam splitter 151 to head toward the flat mirror 27. After being reflected by the flat mirror 27, the beam component simultaneously experiences a 45° inclination of polarization orientation at the two-wavelength half-wave plate 20. Subsequently, the beam component is separated per wavelength by the dichroic mirror 21 and then arrives at the detectors 22 and 23 respectively.

Of the first laser beam L1 that has been directly transmitted through the second-laser-beam polarizing beam splitter 153, the first-laser-beam polarizing beam splitter 152 transmits the P-polarized beam component and directs the beam component to flow horizontally in the drawing, so that the P-polarized beam component is transmitted through the two-wavelength quarter-wave plate 18 and reflected by the flat mirror 19A. The beam component is subsequently transmitted through the two-wavelength quarter-wave plate 18 and becomes S-polarized. Then, the beam component is reflected by the first-laser-beam polarizing beam splitter 152 to be directed to the second-laser-beam polarizing beam splitter 154 and the two-wavelength corner cube 26. Subsequently, the beam component is reflected by the first-laser-beam polarizing beam splitter 151 to be transmitted through the second-laser-beam polarizing beam splitter 154 and the two-wavelength quarter-wave plate 18 sequentially, so that the beam component arrives at the flat mirror 19A. After being reflected by the flat mirror 19A, the beam component is transmitted through the two-wavelength quarter-wave plate 18 and become P-polarized. Then, the beam component is transmitted through the second-laser-beam polarizing beam splitter 154 and the first-laser-beam polarizing beam splitter 151 sequentially and heads toward the flat mirror 27. After being reflected by the flat mirror 27, the beam component simultaneously experiences a 45° inclination of polarization orientation at the two-wavelength half-wave plate 20. Subsequently, the beam component is separated per wavelength by the dichroic mirror 21 and then arrives at the detectors 22 and 23 respectively.

The processing that follows in the detectors 22 and 23 and the calculator 24 is the same as that in the first exemplary embodiment. Accordingly, its explanation will be omitted.

(Other Modifications)

It is preferable that intensity and polarization orientation of the laser beams that come out of the emission aperture of the two-wavelength laser light source 11 are adjusted as required with use of various polarizing elements such as the two-wavelength polarizing beam splitter 15, an ND filter or the like.

Moreover, in anticipation that heat source separation will be conducted, the use of various optical components such as optical fiber can also be considered.

Furthermore, while the two-wavelength corner cubes 17 and 19 are used as fixed reflective mirrors and movable reflective mirrors in the first exemplary embodiment (Fig. 1) and the second exemplary embodiment (Fig. 6), flat mirrors may be used instead.

In that case, it is preferable that the flat mirrors, along with the flat mirrors 17A, 19A and 27 used in Fig. 7 and Fig. 8 are mirrors of wide band or mirrors having favorable reflectance with respect to the two wavelengths used.

In the modification examples shown in Fig. 7 and Fig. 8, while the length of optical path is exemplarily doubly multiplied, the length of optical path can be further multiplied by using two-wavelength polarizing beam splitters and two-wavelength wave plates. Such multiplication contributes to a further enhancement of the resolution of the two-wavelength laser interferometer.

While the above exemplary embodiments exemplarily use Michelson-type laser interferometers for the two-wavelength laser interferometers 1 and 2, the invention is not limited to this configuration. Any other configuration can be used, so long as the measurement beam and the reference beam are interfered with each other and a length measurement is carried out based on the interference signal.

**Claims**

1. A two-wavelength laser interferometer, comprising:

   a two-wavelength laser light source (11) that emits two laser beams (L1 and L2) having different wavelengths;
   a beam splitter (15) that splits each of the two laser beams (L1, L2) having the different wavelengths emitted from the two-wavelength laser light source (11) into a reference beam (L11, L21) and a measurement beam (L12, L22);
   a beam superposer (15) that superposes the reference beam (L11, L21) and the measurement beam (L12, L22) split by the beam splitter (15) and reflected by a reference surface (17, 17A) and a target measurement surface (19, 19A) together; and
   a calculator (24) that obtains a displacement amount (D) of the target measurement surface (19, 19A) per wavelength from the beams superposed together by the beam superposer (15) and obtains a displacement amount (D) of the target measurement surface (19, 19A) applied with atmospheric refractive index correction through a calculation in which the displacement amount (D) obtained per wavelength is used, wherein
   an optical-axis superposer (13) is provided between the two-wavelength laser light source (11) and the beam splitter (15), the optical-axis superposer (13) initially separating the two laser beams (L1, L2) having the different wavelengths emitted from the two-wavelength laser light source (11) and subsequently superposing optical axes of the two laser beams (L1, L2) together.

2. The two-wavelength laser interferometer according to claim 1, wherein
   the optical-axis superposer (13) comprises: a first optical element (31) that separates the two laser beams (L1, L2) having the different wavelengths emitted from the two-wavelength laser light source (11) into a first laser beam (L1) and a second laser beam (L2) according to wavelength; a second optical element (32, 35) that reflects the first laser beam (L1) separated by the first optical element (31) to a predetermined position; a third optical element (33, 36) that reflects the second laser beam (L2) separated by the first optical element (31) to the predetermined position; and a fourth optical element (34) that, at the predetermined position, transmits the second laser beam (L2) reflected by the third optical element (33, 36) and reflects the first laser beam (L1) reflected by the second optical element (32, 35) so that an optical axis of the first laser beam (L1) coincides with an optical axis of the second laser beam (L2).

3. The two-wavelength laser interferometer according to claim 2, wherein
   the first optical element (31) and the third optical element (36) transmit the first laser beam (L1) and reflect the second laser beam (L2), and
   the second optical element (35) and the fourth optical element (34) transmit the second laser beam (L2) and reflect the first laser beam (L1).

4. The two-wavelength laser interferometer according to any one of claims 1 to 3, wherein
   the beam splitter (15) and the beam superposer (15) are provided by a two-wavelength polarizing beam splitter (15), and
   the two-wavelength polarizing beam splitter (15) comprises a combination of: a first-laser-beam polarizing beam splitter (151, 152) that, of the two laser beams (L1 and L2) having the different wavelengths, functions for the first laser beam (L1) and transmits the second laser beam (L2); and a second-laser-beam polarizing beam splitter (153, 154) that, of the two laser beams (L1 and L2) having the different wavelengths, functions for the second laser beam (L2) and transmits the first laser beam (L1).

5. A method of adjusting optical axes in the two-wavelength laser interferometer according to claim 2 or 3, the optical axes being optical axes of the two laser beams (L1, L2) having the different wavelengths emitted from the two-wavelength laser light source (11), the method comprising:

> arranging a detector on the optical axis of at least one beam of the reference beam (L11, L21) and the measurement beam (L12, L22) split by the beam splitter (15); and
> adjusting any one of the optical elements in the optical-axis superposer (13) to reduce an amount of beam misalignment detected by the detector while checking the amount of beam misalignment.

FIG.1

EP 2 133 658 A1

# FIG.2

13

31 32

L1

532nm

1064nm

L2

33 34

# FIG.3

EP 2 133 658 A1

# FIG.4

# FIG.5

FIG.6

FIG.7

# F I G . 8

EP 2 133 658 A1

Europäisches
Patentamt

European
Patent Office

Office européen
des brevets

# EUROPEAN SEARCH REPORT

Application Number

EP 09 16 2542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/114152 A1 (HILL HENRY A [US] ET AL) 17 June 2004 (2004-06-17) * paragraphs [0419] - [0421] - paragraphs [0448] - [0473]; figures 18E,19A * | 1,2,4,5 | INV. G01B9/02 |
| Y | | 3 | |
| X | US 5 748 315 A (KAWAI HITOHSI [JP] ET AL) 5 May 1998 (1998-05-05) * columns 8,19 - column 20; figure 6 * | 1,2,5 | |
| Y | | 3 | |
| Y | GB 2 078 944 A (GEN ELECTRIC) 13 January 1982 (1982-01-13) * page 3, line 22 - line 41; figure 6 * | 3 | |
| A | EP 0 831 568 A (HEWLETT PACKARD CO [US] AGILENT TECHNOLOGIES INC [US]) 25 March 1998 (1998-03-25) * abstract * * page 8, line 4 - line 19 * | 1-5 | |

TECHNICAL FIELDS
SEARCHED (IPC)

G01B

The present search report has been drawn up for all claims

| Place of search | Date of completion of the search | Examiner |
|---|---|---|
| Munich | 18 September 2009 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 16 2542

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2009

| Patent document cited in search report | | Publication date | Patent family member(s) | | Publication date |
|---|---|---|---|---|---|
| US 2004114152 | A1 | 17-06-2004 | NONE | | |
| US 5748315 | A | 05-05-1998 | JP | 8320206 A | 03-12-1996 |
| GB 2078944 | A | 13-01-1982 | CA | 1164094 A1 | 20-03-1984 |
| | | | DE | 3122712 A1 | 18-03-1982 |
| | | | FR | 2484633 A1 | 18-12-1981 |
| | | | IL | 62959 A | 31-07-1984 |
| | | | IT | 1139362 B | 24-09-1986 |
| | | | JP | 3030802 B | 01-05-1991 |
| | | | JP | 57024810 A | 09-02-1982 |
| | | | NL | 8102813 A | 04-01-1982 |
| | | | US | 4349277 A | 14-09-1982 |
| EP 0831568 | A | 25-03-1998 | DE | 69717748 D1 | 23-01-2003 |
| | | | DE | 69717748 T2 | 10-07-2003 |
| | | | JP | 3798127 B2 | 19-07-2006 |
| | | | JP | 10107357 A | 24-04-1998 |
| | | | SG | 54503 A1 | 16-11-1998 |
| | | | US | 5732095 A | 24-03-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Correction of Optical Distance Measurements for the Fluctuating Atmospheric Index of Refraction. *Journal of Geophysical Research,* 15 May 1965, vol. 70 (10), 2461-2462